# EUROPEAN PATENT APPLICATION

(11) **EP 1 777 947 A1**
(43) Date of publication of application: **25.04.2007**
(21) Application number: 06122327.7
(22) Date of filing: 16.10.2006
(51) Int. Cl.: H04N 5/44, H04N 5/445

(54) **Method and device for displaying good reception-sensitivity information in broadcast receiver**

(30) Priority: 22.10.2005 KR 20050099947
(71) Applicant: Samsung Electronics Co., Ltd., Suwon-si, Gyeonggi-Do (KR)
(72) Inventor: Park, Jeong-hoon, Seoul (KR); Ryu, Ga-hyun, Yeongtong-gu Suwon-si Gyeonggi-do (KR); Youm, Sun-hee, Gyeonggi-do (KR); Park, Sung-il, Gyeonggi-do (KR); Seo, Ju-hee, Seoul, (KR)
(74) Representative: Perkins, Dawn Elizabeth

(57) **Abstract**

A method and a device for displaying good reception-sensitivity information in a broadcast receiver. The method includes: detecting location information of the broadcast receiver and a reception sensitivity of a broadcast signal transmitted from a base station; transmitting the detected location information and reception sensitivity to a region information management server managing regional reception-sensitivity information and regional guide information; receiving from the region information management server good reception-sensitivity information, which is information on a region which is closer than a predetermined distance from the broadcast receiver and which has a reception sensitivity greater than a predetermined value, and regional guide information on the corresponding region; and displaying the received good reception-sensitivity information and the received regional guide information.

## Description

Method and apparatuses consistent with the present invention relate to displaying good reception-sensitivity information in a broadcast receiver, and more particularly, to displaying good reception-sensitivity information in a broadcast receiver in which a receiver device such as a digital multimedia broadcasting (DMB) receiver is allowed to receive and display information on regions having good reception sensitivity from a region information management server.

In recent years, with the rapid spread of high sound quality digital technology such as compact disc (CD) and digital versatile disc (DVD), demand for a high quality digital broadcasting has increased. In Europe, Canada and United States of America a digital audio broadcasting (DAB) service is provided to overcome the sound quality limits of the existing FM broadcasting.

A digital audio broadcasting system can provide high sound quality and good mobile reception of signals by utilizing technologies different from existing AM and FM broadcasting, and can transmit digital data such as video and text at a high rate. Digital multimedia broadcasting (DMB) is a recent technology which provides a variety of multimedia services including video as well as audio. Digital multimedia broadcasting includes audio services having a CD sound quality, data services, video services, and provides good mobile and stationary signal reception quality.
A digital multimedia broadcast receiver is portable and can receive broadcasts while moving. The broadcasting receiving function can be added to a mobile phone or a personal digital assistant (PDA), thereby providing the convenience of watching the digital multimedia broadcasting anywhere.

However, a related art broadcast receiver such as a digital multimedia broadcast receiver only displays the reception sensitivity of its current position. When the reception sensitivity is low, the user has to move to a region having a good reception sensitivity or suffer the consequences of impaired reception.

In addition, the conventional broadcast receiver does not provide regional guide information on facilities such as public offices, restaurants, and theaters, traffic information, tourist destination information, and cultural assets.

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a method and a device for displaying good reception-sensitivity information in a broadcast receiver which can receive and display information on regions having good reception sensitivity from a region information management server.

The present invention also provides a method and a device for displaying good reception-sensitivity information in a broadcast receiver which can receive and display information on regions having good reception sensitivity and regional guide information on the corresponding region from a region information management server.

According to an aspect of the present invention, there is provided a method of displaying good reception-sensitivity information in a broadcast receiver, the method comprising: detecting location information of the broadcast receiver and a reception sensitivity of a broadcast signal transmitted from a base station; transmitting the detected location information and reception sensitivity to a region information management server managing regional reception-sensitivity information; receiving good reception-sensitivity information, which is information on a region which is closer than a predetermined distance from the broadcast receiver and which has a reception sensitivity greater than a predetermined value, from the region information management server; and displaying the received good reception-sensitivity information.

According to yet another aspect of the invention, there is provided a method of displaying good reception-sensitivity information in a broadcast receiver, the method comprising: detecting location information of the broadcast receiver and a reception sensitivity of a broadcast signal transmitted from a base station; transmitting the detected location information and reception sensitivity to a region information management server managing regional reception-sensitivity information and regional guide information; receiving good reception-sensitivity information, which is information on a region which is closer than a predetermined distance from the broadcast receiver and which has a reception sensitivity greater than a predetermined value, and regional guide information on the corresponding region from the region information management server; and displaying the received good reception-sensitivity information and the received regional guide information. According to still another aspect of the invention, there is provided a device for displaying good reception-sensitivity information in a broadcast receiver, the device comprising: a location information detector detecting location information of the broadcast receiver; a reception sensitivity detector detecting a reception sensitivity of a broadcast signal received by the broadcast receiver; a communication unit transmitting the detected location information and reception sensitivity to a region information management server managing regional reception-sensitivity information and receiving good reception-sensitivity information, which is information on a region which is closer than a predetermined distance from the broadcast receiver and which has a reception sensitivity greater than a predetermined value, from the region information management server; and a display unit displaying the received good reception-sensitivity information.

According to another aspect of the invention, there is provided a device for displaying good reception-sensitivity information in a broadcast receiver, the device comprising: a location information detector detecting location information of the broadcast receiver; a reception sensitivity detector detecting a reception sensitivity of a broadcast signal received by the broadcast receiver; a communication unit transmitting the detected location information and reception sensitivity to a region information management server managing regional reception-sensitivity information and regional guide information and receiving good reception-sensitivity information, which is information on a region which is closer than a predetermined distance from the broadcast receiver and which has a reception sensitivity greater than a predetermined value, and regional guide information of the corresponding region from the region information management server; and a display unit displaying the received good reception-sensitivity information and regional guide information. According to another aspect of the invention, there is provided a method of providing good reception-sensitivity information from a region information management server managing regional reception sensitivity information to a broadcast receiver, the method comprising: receiving location information of the broadcast receiver and a reception sensitivity from the broadcast receiver; detecting good reception-sensitivity information, which is information on a region which is closer than a predetermined distance from the broadcast receiver and which has a reception sensitivity greater than a predetermined value; and transmitting the detected good reception-sensitivity information to the broadcast receiver. According to another aspect of the invention, there is provided a computer readable medium having embodied thereon a computer program for the method of displaying good reception-sensitivity information in a broadcast receiver.

According to another aspect of the invention, there is provided a computer readable medium having embodied thereon a computer program for the method of providing good reception-sensitivity information from a region information management server.

The above and/or other aspects of the present invention will become more apparent by describing in detail certain exemplary embodiments thereof with reference to the attached drawings in which:
Figure 1 is a block diagram of a device for displaying good reception-sensitivity information in a broadcast receiver according to an exemplary embodiment of the present invention;
Figure 2 is a block diagram of a broadcast signal processor 110 shown in Figure 1;
Figure 3 is a block diagram of a communication unit 160 shown in Figure 1;
Figure 4 is a block diagram of a region information management server 200 shown in Figure 1;
Figure 5 is a diagram illustrating an example of a multiple structure of a digital broadcasting service used in Figure 1;
Figure 6 is a diagram illustrating the structure of a transmission frame used in Figure 1;
Figure 7 is a flowchart illustrating a method of constructing a regional reception-sensitivity information database in a region information management server according to an exemplary embodiment of the invention;
Figure 8 is a flowchart illustrating a method of displaying a reception sensitivity in a broadcast receiver according to an exemplary embodiment of the invention; and
Figure 9 is a flowchart illustrating the flow of operations of the region information management server allowing the broadcast receiver to receive good reception-sensitivity information or good reception-sensitivity information and regional guide information according to an exemplary embodiment of the invention.

Exemplary embodiments of the present invention will now be described in detail with reference to the attached drawings.

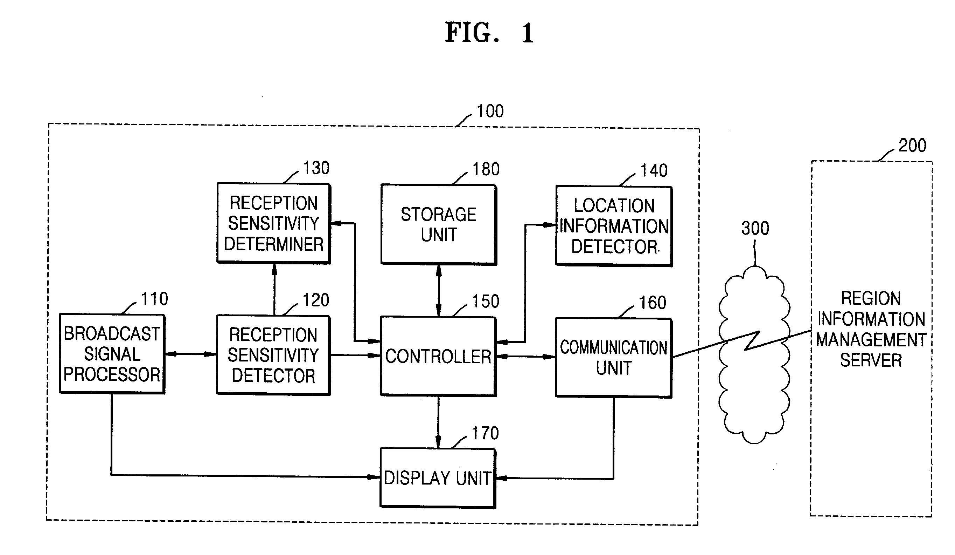

Figure 1 is a block diagram of a device for displaying good reception-sensitivity information in a broadcast receiver according to an exemplary embodiment of the present invention. Referring to Figure 1, a broadcast receiver 100 includes a broadcast signal processor 110, a reception sensitivity detector 120, a reception sensitivity determiner 130, a location information detector 140, a controller 150, a communication unit 160, a display unit 170, and a storage unit 180.

The broadcast receiver 100 may include a general broadcast receiver such as a DMB receiver. That is, the device for displaying good reception-sensitivity information can be constructed by adding the reception sensitivity detector 120, the location information detector 140, and the communication unit 160 to a digital multimedia broadcast receiver. A digital multimedia broadcasting service is an example of a broadcasting service provided through a broadcast signal input to the broadcast receiver 100, but the invention is not limited to this.

The communication unit 160 of the broadcast receiver 100 communicates with a region information management server 200 through a network 300. The network 300 may include wired and/or wireless networks. That is, the network 300 may be a wired network or a wireless network.

When using the region information management server 200, only a broadcast receiver 100 registered therein is allowed to perform the operation shown in Figure 1. That is, the region information management server 200 can be configured to provide good reception-sensitivity information and regional guide information to only the broadcast receiver registered therein, not to all broadcast receivers.

The broadcast signal processor 110 receives a broadcast signal from a broadcasting station, decodes a broadcasting service included in the received broadcast signal, and outputs the decoded broadcasting service to the display unit 170. The broadcast signal processor 110 outputs the broadcast signal received from the broadcasting station to the reception sensitivity detector 120.

The display unit 170 displays the broadcasting service input from the broadcast signal processor 110 and information input from the communication unit 160, which is described below.

In the present invention, reception sensitivity is detected from the broadcasting service received through the broadcast signal processor 110, and good reception-sensitivity information is received from the region information management server 200 and displayed when the detected reception sensitivity is low. Accordingly, a description of displaying the broadcasting service will be omitted.

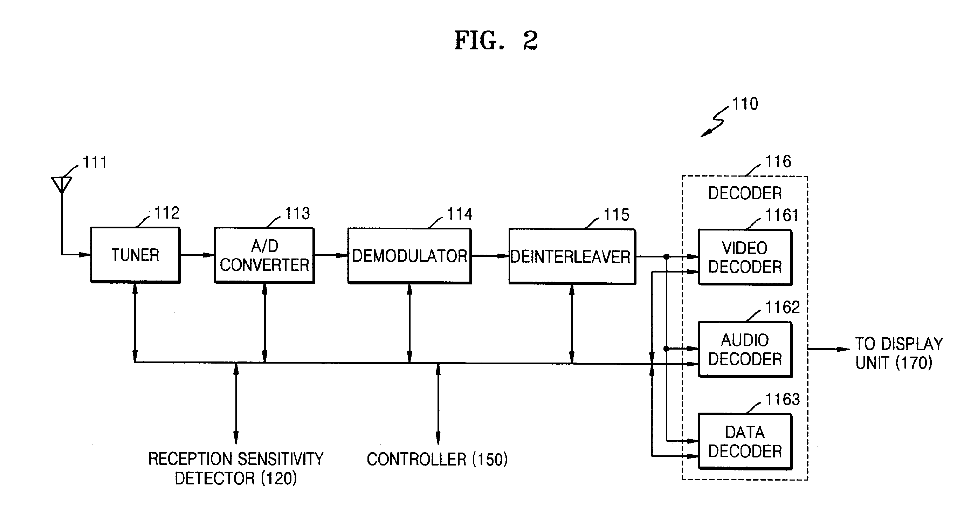

In general, a broadcasting service includes a video broadcasting service component, an audio broadcasting service component, and a data broadcasting service component. The broadcasting service may include at least one of these elements. Details of the broadcast signal processor 110 will be described below with reference to Figure 2.

The reception sensitivity detector 120 detects the reception sensitivity from the broadcast signal input from the broadcast signal processor 110 and outputs the detected reception sensitivity to the control unit 150 and the reception sensitivity determiner 130. The detection of the reception sensitivity can be performed by measuring the electromagnetic field intensity of the input broadcast signal.

The reception sensitivity determiner 130 determines whether the reception sensitivity of the current broadcast signal is good on the basis of the reception sensitivity input from the reception sensitivity detector 120. Here, the reception sensitivity input from the reception sensitivity detector 120 is judged by comparing it to a value stored in the storage unit 180.

For example, when the value is 3 and the reception sensitivity detected by the reception sensitivity detector 120 is 2, the reception sensitivity determiner 130 determines that the reception sensitivity is not good. When the reception sensitivity is good, the reception sensitivity determiner 130 generates and outputs a good reception sensitivity message to the control unit 150. When the reception sensitivity is not good, the reception sensitivity determiner 130 generates and outputs a bad reception sensitivity message to the control unit 150.

The reception sensitivity determiner 130 is shown in Figure 1, but can be constructed in other ways. That is, the operation shown in Figure 1 may be performed without additionally providing the reception sensitivity determiner 130. The location information detector 140 detects location information of the broadcast receiver 100 from GPS information or the like, and outputs the location information to the control unit 150. Here, the location information detector 140 can be a GPS receiver, but the invention is not limited to this and the location information may be detected by various alternative methods.

The control unit 150 receives the location information from the location information detector 140 and the reception sensitivity from the reception sensitivity detector 120. The control unit 150 receives the good reception sensitivity message or the bad reception sensitivity message from the reception sensitivity determiner 130.

When the control unit 150 receives a bad reception sensitivity message, the control unit 150 outputs the location information input from the location information detector 140 and the reception sensitivity input from the reception sensitivity detector 120 to the communication unit 160.

On the other hand, when the control unit 150 receives a good reception sensitivity message, the control unit 150 does not output the location information input from the location information detector 140 and the reception sensitivity input from the reception sensitivity detector 120 to the communication unit 160. However, even in this case, the control unit 150 periodically transmits the location information input from the location information detector 140 and the reception sensitivity input from the reception sensitivity detector 120 to the region information management server 200 through the communication unit. In this way, the region information management server 200 can be updated with regional reception-sensitivity information from a plurality of broadcast receivers 100 periodically.

However, in an exemplary embodiment where the reception sensitivity determiner 130 is not additionally provided as described above, the control unit 150 can output the location information input from the location information detector 140 and the reception sensitivity input from the reception sensitivity detector 120 directly to the communication unit 160.

The communication unit 160 receives good reception-sensitivity information detected by the region information management server 200 or the good reception sensitivity information and the regional guide information by communicating with the region information management server 200 through the network 300.

The good reception-sensitivity information indicates information on regions which are close to the broadcast receiver 100 and which have reception sensitivity greater than a predetermined value. The regional guide information may indicate a variety of information on facilities such as public offices, restaurants, theatres, traffic information, tourist destination information, and cultural assets in the regions having good reception sensitivity.

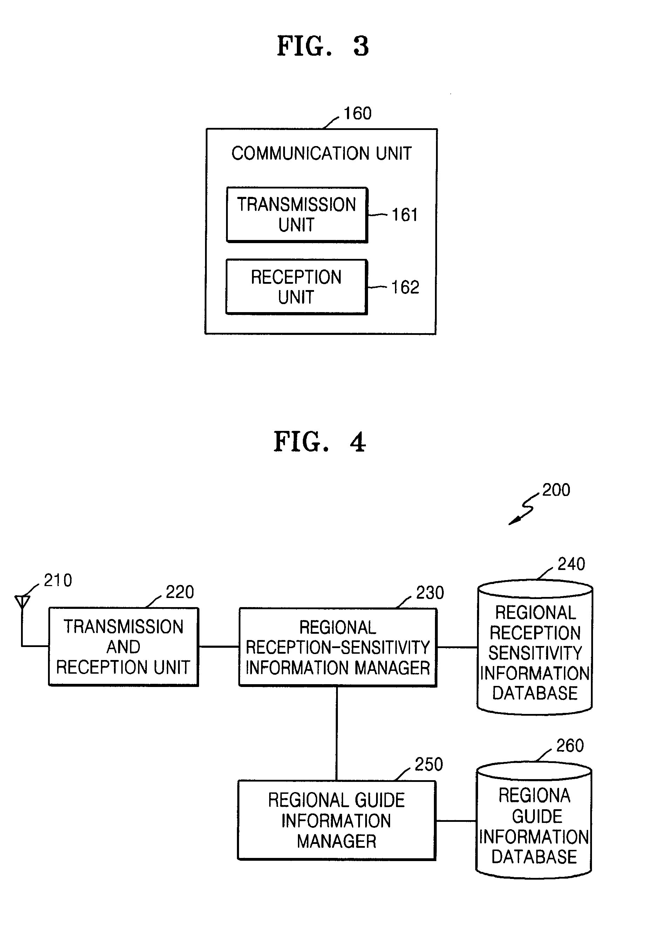

The communication unit 160 is described in more detail with reference to Figure 3. Figure 3 is a block diagram of the communication unit 160 shown in Figure 1. Referring to Figure 3, the communication unit 160 includes a transmission unit 161 and a reception unit 162.

The transmission unit 161 transmits the location information and the reception sensitivity of the broadcast receiver 100 input from the control unit 150 to the region information management server 200 through the network 300.

The reception unit 162 receives the good reception-sensitivity information or the good reception-sensitivity information along with the regional guide information transmitted from the region information management server 200 through the network 300 and outputs the information to the control unit 150 and the display unit 170.

The display unit 170 displays the good reception-sensitivity information or the good reception-sensitivity information along with the regional guide information input from the communication unit 160 on a display screen, thereby allowing a user to see the information. The good reception-sensitivity information or the good reception-sensitivity information along with the regional guide information can be displayed by various methods.

These methods can include displaying reception sensitivities of regions having a constant distance from the current location on a map, or displaying an arrow on a small screen of the broadcast receiver 100, but the present invention is not limited to these methods.

The display unit 170 may be implemented with a general liquid crystal display (LCD), but may also be implemented with a plasma display panel (PDP), and is not limited to a particular display device or technology.

The storage unit 180 may include a Read Only Memory (ROM) storing control programs of the control unit 150, a Random Access Memory (RAM) temporarily storing data resulting from executing the control programs of the control unit 150, an Electrically Erasable and Programmable ROM (EEPROM) or flash memory storing adjustment data to be provided to the reception sensitivity determiner 130. Figure 2 is a block diagram of the broadcast signal processor 110 shown in Figure 1. Referring to Figure 2, the broadcast signal processor 110 includes an antenna 111, a tuner 112, an analog-to-digital (A/D) converter 113, a demodulator 114, a deinterleaver 115, and a decoder 116. The decoder 116 includes a video decoder 1161, an audio decoder 1162, and a data decoder 1163.

The tuner 112 receives only RF signals corresponding to the broadcasting service desired by a user from among RF signals received through the antenna 111, converts the desired RF signals into analog Intermediate Frequency (IF) signals, and outputs the converted signals to the A/D converter 113. The tuner 112 selects a frequency band of an ensemble modulation signal in which the broadcasting service desired by the user is multiplexed.

The A/D converter 113 digitalizes the analog IF signals output by the tuner 112 and outputs the digital signals to the demodulator 114.

The demodulator 114 performs Fast Fourier Transform (FFT) and differential demodulation on the digital signals output from the A/D converter 113 and outputs the demodulated signals to the deinterleaver 115.

The deinterleaver 115 de-interleaves the demodulated signals in the frequency domain and then divides the de-interleaved signals into a fast information channel (FIC) signal, which is a control channel signal, and a main service channel (MSC) signal, which is a data channel signal.

The main service channel signal is de-interleaved again in the time domain. Thereafter, the video service component is output to and decoded by the video decoder 1161, the audio service component is output to and decoded by the audio decoder 1162, and the data service component is output to and decoded by the data decoder 1163. At the same time, the fast information channel signal is output to and decoded by the controller 150.

Although the example in Figure 2 shows that the broadcast signal processor 110 includes the antenna 111, the tuner 112, the A/D converter 113, the demodulator 114, the deinterleaver 115, and the decoder 116, the Figure only depicts an exemplary embodiment of the present invention, and therefore, is not limited to this example.

Figure 4 is a block diagram of the region information management server 200 shown in Figure 1. Referring to Figure 4, the region information management server 200 includes an antenna 210, a transceiver 220, a regional reception-sensitivity information manager 230, a regional reception-sensitivity information database 240, a regional guide information manager 250, and a regional guide information database 260.

A reception module of the transceiver 220 receives the location information and the reception sensitivity of the broadcast receiver 100 through the antenna 210 and outputs them to the regional reception-sensitivity information manager 230.

The regional reception-sensitivity information manager 230 receives the location information and the reception sensitivity of the broadcast receiver 100. The regional reception-sensitivity information manager 230 detects good reception-sensitivity information, which is information on a region which is within a predetermined distance from the broadcast receiver 100 and which has a reception sensitivity greater than a predetermined value, from among the regional reception-sensitivity information stored in the regional reception-sensitivity information database 240. Here, the case that the reception sensitivity is greater than the predetermined value may include, for example, a case that the reception sensitivity is greater than the previously detected reception sensitivity.

The good reception-sensitivity information can be displayed by various methods. These methods may include displaying reception sensitivities of regions having a constant distance from the current location of the broadcast receiver 100 on a map, or displaying an arrow on a small screen of the broadcast receiver 100, but the present invention is not limited to these exemplary methods.

The regional reception-sensitivity information manager 230 can request the regional guide information manager 250 to output the regional guide information corresponding to the regions of the detected good reception-sensitivity information.

The regional guide information manager 250 detects the regional guide information stored in the regional guide information database 260 and outputs the regional guide information to the regional reception-sensitivity information manager 230. Here, the regional guide information can include a variety of region information on facilities such as public offices, restaurants, theaters, traffic information, tourist destination information, and cultural assets.

The regional reception-sensitivity information manager 230 outputs the good reception-sensitivity information or the good reception-sensitivity information along with the regional guide information to the transceiver 220.

A transmission unit of the transceiver 220 transmits the good reception-sensitivity information or the good reception-sensitivity information along with the regional guide information to the broadcast receiver 100.

The regional guide information manager 250 and the regional guide information database 260 shown in Figure 4 can be constructed in many different ways. That is, in Figure 4, the regional reception-sensitivity information manager 230 may transmit only the good reception-sensitivity information to the broadcast receiver 100.

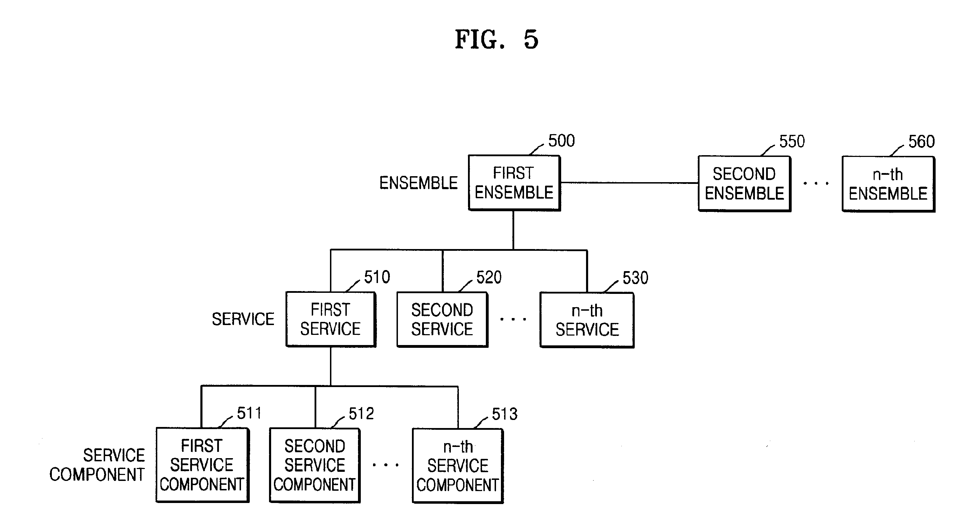

Figure 5 illustrates a multiple structure of the digital broadcasting service used in Figure 1.

The multiple structure of the digital broadcasting service includes ensembles, services, and service components. One or more broadcasting service components constitute a broadcasting service and one or more broadcasting services constitute an ensemble.

The ensemble is obtained by performing a channel coding process on encoded video streams, encoded audio streams, encoded data streams, and multiplexing the coded streams along with system data into a single bit stream. Generally, one broadcasting station provides one ensemble.

The service is an output selected by a user, such as a video service, an audio service, and a data service. The service components are elements constituting a service.

Multiplexer configuration information (MCI) is used to indicate what services are multiplexed in an ensemble, what service components constitute the services, and where the service components are located.

Referring to Figure 5, the first ensemble 500 includes a first broadcasting service 510, a second broadcasting service 520 and an n-th broadcasting service 530. Here, the first ensemble 500 includes n broadcasting services, but may include only one broadcasting service.

The first broadcasting service 510 includes a first broadcasting service component 511, a second broadcasting service component 512, ..., and an n-th broadcasting service component 513. Here, the first broadcasting service 510 includes n broadcasting service components, but may include only one broadcasting service component.

The second broadcasting service 520 and the n-th broadcasting service 530 each have the same structure as the first broadcasting service 510, and the second ensemble 550 and the n-th ensemble 560 each have the same structure as the first ensemble 500.

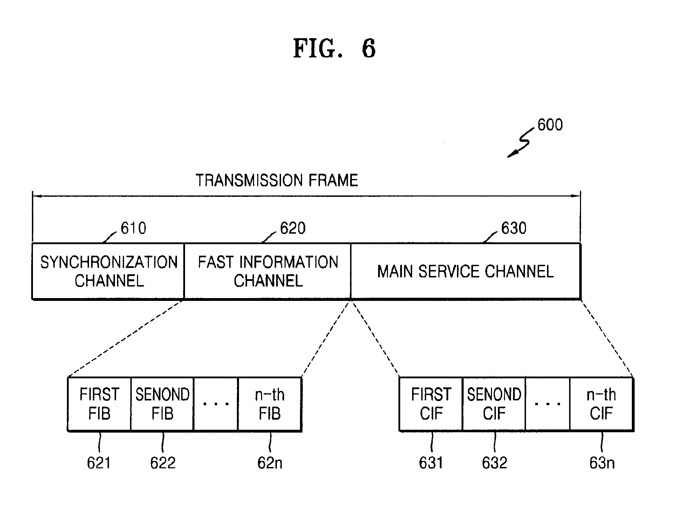

Figure 6 shows an example of the structure of a transmission frame used in Figure 1. Referring to Figure 6, a digital broadcasting transmission frame 600 includes a synchronization channel (SC) 610, a fast information channel (FIC) 620, and a main service channel (MSC) 630.

The synchronization channel 610 includes a null symbol, an OFDM symbol, and a reference symbol necessary for carrier frequency synchronization.

The fast information channel 620 is used to transmit a variety of information for receiving a broadcasting service and includes multiplexer configuration information (MCI), service information (SI), fast information data channel (FIDC), and conditional access (CA) information. The digital multimedia broadcast receiver uses the multiplexer configuration information in the fast information channel to locate service components of a service desired by a user. The digital multimedia broadcast receiver receives the desired broadcasting by extracting a portion including the service components of the service desired by the user from the broadcasting contents transmitted through the main service channel, and reconstructs the extracted portion. Accordingly, the multiplexer configuration information is core information which is important for receiving the desired broadcasting service in the digital multimedia broadcasting in which a plurality of broadcasting services are multiplexed and transmitted.

The fast information channel 620 in Figure 6 includes a plurality of blocks including a first FIB (Fast Information Block) 621, a second FIB 622 and an n-th FIB 62n.

The main service channel 630 includes one or more frame referred to as Common Interleaved Frame (CIF) and is used by a broadcasting service provider to transmit video, sound, and data.

The main service channel 630 in Figure 6 includes a plurality of frames including a first CIF 631, a second CIF 632 and an n-th CIF 63n.

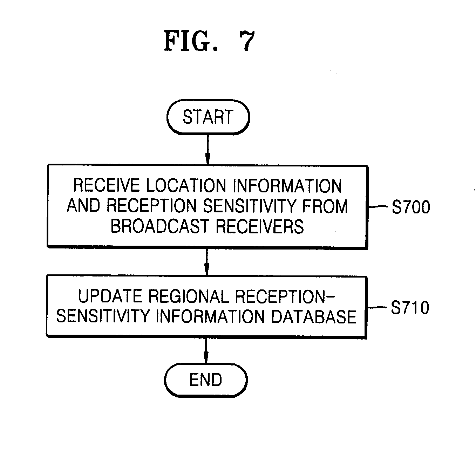

Figure 7 is a flowchart illustrating a method of constructing the regional reception-sensitivity information database of the region information management server (denoted by 200 in Figure 1) according to an exemplary embodiment of the invention.

Referring to Figure 7, the region information management server 200 receives location information and reception sensitivities of broadcast receivers 100 from the broadcast receivers (S700).

Next, the region information management server 200 updates the regional reception-sensitivity information database (denoted by 240 in Figure 4) on the basis of the location information and the reception sensitivities input in operation S700 (S710).

In this way, the region information management server 200 can gather accurate regional reception-sensitivity information by continuously receiving the location information and the reception sensitivities from a plurality of broadcast receivers 200 and store the received information in the regional reception-sensitivity information database 240.

The elements of Figure 7 which are not described are equivalent to those shown in Figures 1 to 6.

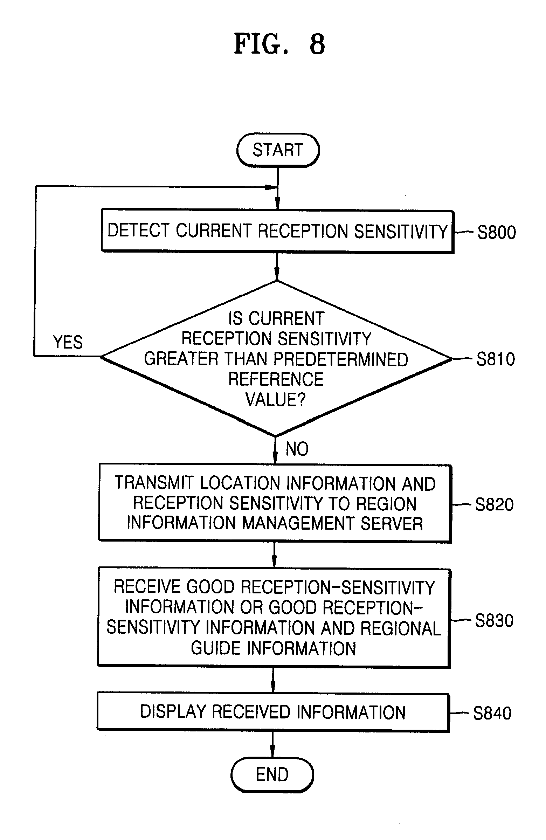

Figure 8 is a flowchart illustrating a method of displaying a reception sensitivity in a broadcast receiver 100 according to an exemplary embodiment of the invention.

Referring to Figure 8, a broadcast receiver 100 detects the current reception sensitivity from a broadcast signal transmitted from a broadcasting station (S800), by measuring the electromagnetic field intensity of the broadcast signal.

Next, it is determined whether the reception sensitivity detected in operation S800 is greater than a predetermined value (S810). If it is, i.e. the reception quality is good, operation S800 is performed again. If not, operation S820 is performed.

For example, when the detected reception sensitivity is 2 and the predetermined value is 3, it is determined in operation S810 that the reception quality is not good, and then operation S820 is performed. On the other hand, when the detected reception sensitivity is 4 and the predetermined value is 3, it is determined in operation S810 that the reception quality is good and then operation S800 is performed gain.

In operation S820, the location information and the reception sensitivity of the broadcast receiver 100 are transmitted to the region information management server 200.

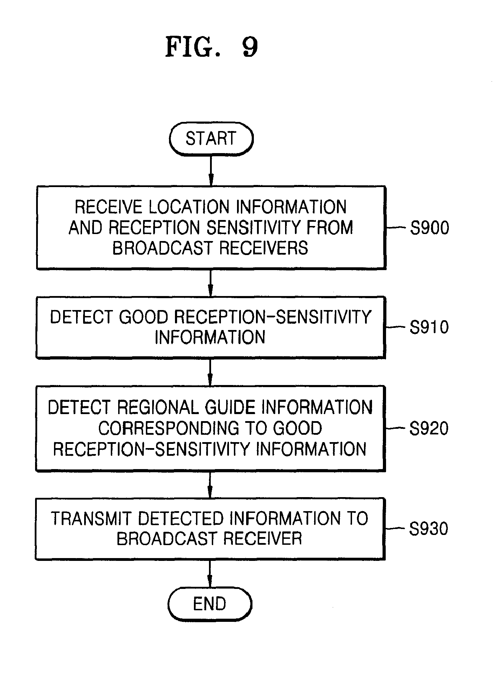

Next, good reception-sensitivity information or good reception-sensitivity information along with regional guide information are received from the region information management server 200 (S830). The process of the region information management server 200 detecting the good reception-sensitivity information or the good reception-sensitivity information along with the regional guide information and outputting the detected information to the broadcast receiver 100 is described later with reference to Figure 9.

Next, the good reception-sensitivity information or the good reception-sensitivity information along with the regional guide information are displayed on a display screen (S840).

The elements of Figure 8, which are not described, are equivalent to those shown in Figures 1 to 6.

Figure 9 is a flowchart illustrating a process used by the region information management server transmitting the good reception-sensitivity information or the good reception-sensitivity information along with the regional guide information to the broadcast receiver in operation S830.

Referring to Figure 9, the region information management server 200 receives the location information and the reception sensitivity of the broadcast receiver 100 from the broadcast receiver 100 (S900).

Next, the region information management server 200 detects the good reception-sensitivity information (S910). The detection of the good reception-sensitivity information is performed by detecting the regional reception-sensitivity information of a region which is close to the broadcast receiver 100 and which has a reception sensitivity greater than a predetermined value, from among the regional reception-sensitivity information stored in the region reception-sensitivity information database 240 in response to receiving the location information and the reception sensitivity of the broadcast receiver 100.

Next, the region information management server 200 detects the regional guide information corresponding to the regions in the good reception-sensitivity information (S920). Here, the detection of the regional guide information is performed by requesting the regional guide information corresponding to the regions in the good reception-sensitivity information detected in operation S910. The regional guide information may include a variety of region information on facilities such as public offices, restaurants, theaters, traffic information, tourist destination information, and cultural assets.

Next, the region information management server 200 transmits the good reception-sensitivity information detected in operation S910 along with the regional guide information detected in operation S920 to the broadcast receiver 100 (S930).

Operation S920 in Figure 9 can be varied as necessary. That is, operation S930 may be performed after operation S910 in Figure 9, and in operation S930, only the good reception sensitivity information detected in operation S910 may be transmitted to the broadcast receiver 100.

The elements of Figure 9, which are described, are equivalent to those shown in Figures 1 to 6.

The method and device for displaying good reception-sensitivity information in a broadcast receiver according to the exemplary embodiments of the present invention can easily find out which region has the best reception sensitivity and receive a broadcasting service having a good reception sensitivity, by allowing a DMB receiver to receive information on a region which has a good reception sensitivity and is close to the current location, from the region information management server.

In addition, a user can watch varied information on a region since the digital multimedia broadcast receiver can receive the regional guide information on the corresponding region along with the good reception-sensitivity information from the region information management server. The regional guide information can include, for example, information on facilities such as public offices, restaurants, and theatres, traffic information, tourist destination information, and cultural assets.

In this way, the method and device for displaying good reception-sensitivity information in a broadcast receiver may increase the demand for the digital multimedia broadcasting, and in turn, the demand for the digital multimedia broadcast receiver.

The present invention can also be embodied as computer readable codes on a computer readable recording medium. The computer readable recording medium is any data storage device that can store data which can be read thereafter by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

While the present invention has been particularly shown and described with reference to exemplary embodiments thereof, it will be understood by those skilled in the art that various changes in form and detail may be made therein without departing from the scope of the present invention as defined by the appended claims.

## Claims

1. A method of displaying reception sensitivity information in a broadcast receiver (100), the method comprising:
detecting location information of the broadcast receiver (100) and a reception sensitivity of a broadcast signal transmitted from a base station;
transmitting the detected location information and the detected reception sensitivity to a region information management server (200) which manages regional reception-sensitivity information;
receiving from the region information management server (200) good reception-sensitivity information, which is information on a region which is closer than a predetermined distance from the broadcast receiver (100) and which has a reception sensitivity greater than a predetermined value; and
displaying the received good reception-sensitivity information.

2. The method of claim 1, wherein the region information management server also manages regional guide information, and regional guide information on the corresponding region is received from the region information management server together with the good reception-sensitivity information and is displayed.

3. The method of claim 2, wherein the regional guide information includes at least one of facility information, traffic information and tourist destination information.

4. The method of any one of the preceding claims, wherein the detecting the location information and the reception sensitivity of the broadcast signal is performed by the broadcast receiver (100).

5. The method of any one of the preceding claims, wherein the displaying the received good reception sensitivity information and/or the regional guide information is performed by the broadcast receiver (100).

6. The method of any one of the preceding claims, further comprising determining whether the detected reception sensitivity is smaller than a predetermined reception sensitivity, prior to transmitting the detected location information and the detected reception sensitivity to the region information management server (200), wherein if it is determined that the detected reception sensitivity is smaller than the certain reception sensitivity, the transmitting the detected location information and the detected reception sensitivity is performed.

7. The method of any one of the preceding claims, wherein the detected location information and detected reception sensitivity are periodically transmitted to the region information management server (200).

8. The method of any one of the preceding claims, wherein the reception sensitivity of the good reception-sensitivity information is greater than the detected reception sensitivity.

9. The method of any one of the preceding claims, wherein the broadcast receiver (100) is a digital multimedia broadcasting receiver.

10. The method of any one of the preceding claims, wherein the broadcast receiver (100) is registered in advance in the region information management server (200).

11. The method of claim 10, wherein access to the region information management server (200) is limited to the broadcast receiver (100) which is registered in advance.

12. The method of any one of the preceding claims, wherein the region information management server (200) receives reception sensitivities from a plurality of broadcast receivers (100) and manages the regional reception-sensitivity information based on the received reception sensitivities.

13. The method according to any one of the preceding claims, wherein the detecting of the reception sensitivity comprises measuring the electromagnetic field intensity of the broadcast signal.

14. A device for displaying reception-sensitivity information in a broadcast receiver (100), the device comprising:
a location information detector (140) which detects location information of the broadcast receiver (100);
a reception sensitivity detector (120) which detects a reception sensitivity of a broadcast signal received by the broadcast receiver (100);
a communication unit (160) which transmits the detected location information and the detected reception sensitivity to a region information management server (200) which manages regional reception-sensitivity information and receives good reception-sensitivity information from the region information management server (200); and
a display unit (170) which displays the received good reception-sensitivity information, wherein the good reception-sensitivity information includes information on a region which is closer than a predetermined distance from the broadcast receiver and has a reception sensitivity greater than a predetermined value.

15. The device of claim 14, wherein the region information management server also manages regional guide information, wherein regional guide information for a corresponding region is received from the region information server together with the good-reception sensitivity information and displayed.

16. The device of claim 15, wherein the regional guide information includes at least one of facility information, traffic information, and tourist destination information.

17. The device of any one of claims 14 to 16, further comprising a reception sensitivity determiner (130) which determines whether the reception sensitivity detected by the reception sensitivity detector (120) is smaller than a certain reception sensitivity, wherein if the reception sensitivity determiner (130) determines that the detected reception sensitivity is smaller than the certain reception sensitivity, the communication unit (160) transmits the detected reception sensitivity to the region information management server (200).

18. The device of claim 17, wherein if the reception sensitivity determiner (130) determines that the detected reception sensitivity is smaller than the certain reception sensitivity, the communication unit (160) transmits the detected reception sensitivity and the detected location information to the region information management server (200).

19. The device of claim 17 or 18, wherein when the reception sensitivity determiner (130) determines that the detected reception sensitivity is greater than the certain reception sensitivity, the communication unit (160) periodically transmits the detected reception sensitivity and the detected location information to update the region information management server (200).

20. The device of any one of claims 14 to 19, wherein the reception sensitivity greater than the predetermined value is a maximum reception sensitivity which is greater than the detected reception sensitivity.

21. The device of any one of claims 14 to 20, wherein the broadcast receiver (100) is a digital multimedia broadcasting receiver.

22. The device of any one of claims 14 to 21, wherein the region information management server (200) receives reception sensitivities from a plurality of broadcast receivers (100) and manages the regional reception sensitivity information based on the received reception sensitivities.

23. A method of providing reception-sensitivity information from a region information management server (200) which manages regional reception sensitivity information, the method comprising:
receiving location information and a reception sensitivity from the broadcast receiver (100);
detecting good reception-sensitivity information, which is information on a region which is closer than a certain distance from the broadcast receiver (100) and has a reception sensitivity greater than a certain value; and
transmitting the detected good reception-sensitivity information to the broadcast receiver (100).

24. The method of claim 23, wherein the good reception-sensitivity information includes regional guide information at least one of facility information, traffic information and tourist destination information.

25. The method of claim 23 or 24, wherein the broadcast receiver (100) is a digital multimedia broadcasting receiver.

26. The method of any one of claims 23 to 25, comprising:
receiving reception sensitivities from a plurality of broadcast receivers (100) and using the received reception sensitivities for determining the good reception-sensitivity information.

27. A region information management server (200) comprising:
means for receiving location information and a reception sensitivity from a broadcast receiver (100);
means for detecting good-reception sensitivity information, which is information on a region which is closer than a certain distance from the broadcast receiver (100) and has a reception sensitivity greater than a predetermined value; and
means for transmitting the detected good reception-sensitivity information to the broadcast receiver (100).

28. A region information management server (200) according to claim 27 further comprising:
a database for storing received reception sensitivities from a plurality of broadcast receivers in a plurality of locations and
means for using said received reception sensitivities to determine the good reception-sensitivity information.

29. A computer readable medium having embodied thereon a computer program for carrying out the method of any of claims 1 to 13 or 23 to 25.
